(19) **Europäisches Patentamt / European Patent Office / Office européen des brevets**

(11) **EP 2 956 846 B1**

(12) **FASCICULE DE BREVET EUROPEEN**

(45) Date de publication et mention
de la délivrance du brevet:
**25.03.2020 Bulletin 2020/13**

(21) Numéro de dépôt: **14707665.7**

(22) Date de dépôt: **10.02.2014**

(51) Int Cl.:
*G06F 3/041* (2006.01)        *G06F 3/042* (2006.01)
*G06F 3/044* (2006.01)        *G06F 3/0488* (2013.01)

(86) Numéro de dépôt international:
**PCT/EP2014/052533**

(87) Numéro de publication internationale:
**WO 2014/124897 (21.08.2014 Gazette 2014/34)**

(54) **PROCÉDÉ, APPAREIL ET SUPPORT DE STOCKAGE POUR NAVIGUER DANS UN ÉCRAN D'AFFICHAGE**

VERFAHREN, VORRICHTUNG UND SPEICHERMEDIUM ZUR NAVIGATION AUF EINEM ANZEIGEBILDSCHIRM

METHOD, DEVICE AND STORAGE MEDIUM FOR NAVIGATING IN A DISPLAY SCREEN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.02.2013 FR 1351275**

(43) Date de publication de la demande:
**23.12.2015 Bulletin 2015/52**

(73) Titulaire: **QuickStep Technologies LLC
Wilmington, DE 19801 (US)**

(72) Inventeur: **ROZIERE, Didier
F-30900 Nîmes (FR)**

(74) Mandataire: **Lang, Johannes
Bardehle Pagenberg Partnerschaft mbB
Patentanwälte, Rechtsanwälte
Prinzregentenplatz 7
81675 München (DE)**

(56) Documents cités:
**EP-A1- 2 104 024        EP-A2- 2 426 581
US-A1- 2007 216 659        US-A1- 2009 289 914
US-A1- 2011 164 063        US-A1- 2011 221 776
US-A1- 2011 221 776        US-A1- 2012 026 113**

Printed by Jouve, 75001 PARIS (FR)

**Description**

**Domaine technique**

La présente invention concerne un procédé pour naviguer, par l'intermédiaire d'une surface de commande, dans un écran d'affichage et en particulier un écran d'affichage affichant au moins une zone ou un symbole. Elle concerne en outre un dispositif et un appareil comprenant une telle navigation.

Le domaine de l'invention est plus particulièrement, mais de manière non limitative, celui des interfaces homme machine sans contact.

**Etat de la technique**

Les interfaces tactiles, ou écrans tactiles, sont actuellement largement utilisées pour contrôler des appareils aussi variés que des ordinateurs, des téléphones portables, des tablettes,....

De manière générale, une interface tactile comprend un écran d'affichage combiné ou intégrant un ou des capteurs qui permettent de déterminer un ou des point(s) de contact entre la surface de l'écran et un ou plusieurs objets de commande tels qu'un ou des doigts ou un stylet. Elle comprend également une partie logicielle permettant d'interpréter les commandes de l'utilisateur.

Les technologies de mesure capacitives sont adaptées à la réalisation de ce type d'interfaces.

Les nouvelles interfaces tactiles, dites interfaces 3D, intègrent une détection d'objets à distance avant qu'ils ne touchent la surface de l'écran. Ces interfaces tactiles permettent également de déclencher une commande ou une fonction préalablement associée à un symbole visé par l'objet de commande, lorsque la distance entre l'objet de commande et la surface de commande atteint une valeur prédéterminée. Une telle interface est décrite dans la demande de brevet français déposée par la Demanderesse et publiée sous le numéro FR 2 971 066 A1.

Avec cette interface, il est ainsi possible de sélectionner, à distance de la surface de commande, des fonctions préalablement associées à un couple (symbole affichée ; distance entre l'objet de commande et la surface de commande). Cette interface apporte donc une possibilité intéressante pour réaliser une sélection d'une commande au travers d'une surface de commande, qui vient s'ajouter à la possibilité de sélection par contact avec une surface de commande communément utilisée.

Un but de la présente invention est de proposer des fonctionnalités additionnelles pour naviguer dans un écran d'affichage proposant un meilleur contrôle d'une interface utilisateur.

Un autre but de la présente invention est de proposer un procédé pour naviguer sur un écran d'affichage facilitant et accélérant la sélection d'une commande sur un écran d'affichage.

Un autre but de la présente invention est de proposer un procédé pour naviguer sur un écran d'affichage rendant la navigation et la sélection sur un écran d'affichage plus ergonomique pour un utilisateur.

Document US 2011/164063 A1 divulgue un écran avec un dispositif de saisie.

Document EP 2 426 581 A2 divulgue un dispositif de traitement d'informations, un procédé de traitement d'informations et un programme informatique.

Document US 2012/026113 A1 divulgue un dispositif de traitement d'informations, un procédé de traitement d'informations et un support de stockage informatisé.

Document EP 2 104 024 A1 divulgue un terminal portable capable de détecter un toucher de proximité et procédé pour écran de contrôle l'utilisant.

Document US 2009/289914 A1 divulgue un terminal mobile ayant une touche de proximité et une méthode de commande d'un écran d'affichage de celui-ci.

Document US 2011/221776 A1 divulgue un dispositif de saisie d'affichage et un dispositif de navigation.

Document US 2007/216659 A1 divulgue un terminal de communication mobile et un procédé correspondant.

**Exposé de l'invention**

Au moins un de ces objectifs est atteint avec un procédé pour naviguer dans un écran d'affichage par l'intermédiaire d'une surface de commande, tel que revendiqué dans la revendication 1.

Ainsi le procédé selon l'invention permet d'utiliser la distance entre un objet de commande et la surface de commande pour soit manipuler une zone et/ou un symbole affiché(e) sur l'écran soit ajuster un paramètre relatif à une telle manipulation, sans pour autant que l'objet de commande ne touche la surface de commande, ou que l'utilisateur ne fasse une quelconque sélection.

Une telle exploitation, suivant l'invention, de la distance entre un objet de commande et la surface de commande permet de rendre la navigation plus directe et plus rapide, plus simple et plus ergonomique comparé aux interfaces actuelles.

Par exemple, pour repositionner une icône sur écran d'affichage avec les interfaces actuelles, il est d'abord nécessaire d'activer au préalable une fonction de déplacement, en particulier par contact prolongé avec une surface de commande avec l'interface mis en œuvre par l'iPhone®. Suivant un autre exemple, pour agrandir une icône (ce qui revient à déplacer une partie seulement de l'icône ou déplacer une zone d'affichage contenant l'icône) avec les interfaces actuelles, il est nécessaire d'utiliser deux objets de commande qui sont en général deux doigts, et de les déplacer latéralement l'un par rapport à l'autre. La présente invention, permet de se passer d'une étape préalable d'activation d'une fonction ou d'une utilisation de deux objets de commande, ce qui rend la navigation plus directe, plus rapide, plus simple et plus ergonomique pour l'utilisateur.

De plus, aucune interface connue dans l'état de la technique antérieur ne permet d'ajuster un paramètre de déplacement d'un objet en fonction de la distance entre un objet de commande et une surface de commande. Ainsi, l'invention apporte une nouvelle fonctionnalité aux interfaces actuelles.

Selon l'invention, chaque symbole peut être un symbole associé/dédié à une commande.

Chaque symbole peut comprendre un ou plusieurs autres symboles, et en particulier peut être un ensemble de symboles, tel qu'un dossier de symboles.

Pour éviter les lourdeurs rédactionnelles, dans la suite de la demande, l'expression « élément » désigne « une zone et/ou un symbole ».

Dans une version particulière et nullement limitative de l'invention, par « déplacement » on entend un déplacement de l'élément affiché sur l'écran d'affichage, sans qu'un tel déplacement ajoute une nouvelle dimension à afficher pour ledit élément.

Toujours dans une version particulière et nullement limitative, le déplacement et/ou l'ajustement réalisé par l'étape de contrôle prend en compte une unique position de pointage de l'objet de commande et concerne un élément choisi par rapport à cette unique position pointage.

Selon l'invention, un déplacement d'un élément peut concerner uniquement une partie de l'élément, de sorte que ledit déplacement consiste en une modification de la taille affichée dudit élément sur l'écran d'affichage. Autrement dit, dans ce cas, le déplacement est zoom de l'élément.

En particulier, la modification de la taille ou le zoom de l'élément peut être réalisée de sorte que la taille de l'élément augmente lorsque la distance verticale diminue.

La modification de la taille de l'élément peut être réalisée de sorte qu'une partie de l'élément n'est plus affichée sur l'écran.

Dans un premier mode de réalisation, l'étape de contrôle peut en outre comprendre une modification de la taille d'au moins un élément, autre que l'élément choisi, affiché sur l'écran d'affichage, de sorte que la taille totale de l'ensemble des éléments reste constante.

Une telle modification peut éventuellement être accompagnée d'un repositionnement d'au moins un élément autre que l'élément choisi.

La modification de la taille d'au moins un autre élément peut être une augmentation de sa taille ou une diminution de sa taille. Dans un exemple de réalisation particulier, les éléments adjacents à l'élément choisi peuvent subir une modification de taille de même sens et le reste des éléments une modification de taille de sens contraire par rapport au sens de la modification de taille réalisée sur l'élément choisi.

En particulier, l'étape de contrôle peut comprendre une modification de la taille de tous les autres éléments affichés sur l'écran d'affichage, éventuellement accompagnée d'un repositionnement d'au moins un d'entre eux, de sorte que tous les éléments restent affichés sur l'écran d'affichage.

En outre, l'étape de contrôle peut comprendre une modification de la taille d'un ensemble comprenant l'élément choisi et au moins un autre élément, de sorte que la taille dudit au moins un autre élément reste constante lors de la modification de la taille de l'élément choisi.

Une telle modification peut éventuellement être accompagnée d'un repositionnement d'au moins un élément autre que l'élément choisi.

La modification de la taille de l'ensemble peut être une augmentation de sa taille ou une diminution de sa taille, et correspond en particulier à une modification de même sens que le sens de la modification réalisée sur la taille de l'élément choisi.

L'ensemble peut être celui qui comprend tous les éléments représentés sur l'écran d'affichage. Dans ce cas, en fonction de la distance verticale mesurée, certains des éléments affichés initialement sur l'écran d'affichage peuvent disparaître de ou réapparaître à l'écran d'affichage lors de la modification de la taille de l'élément choisi, ce qui suppose un repositionnement de ces éléments.

Avantageusement, lorsqu'un élément dont la taille est modifiée, comprend au moins une zone, dite sous-zone, et/ou au moins un symbole, dit sous-symbole, l'étape de contrôle peut en outre comprendre une modification de la taille dudit au moins une sous-zone et/ou un sous-symbole.

Dans ce cas, la modification de la taille de l'au moins une sous-zone et/ou un sous-symbole est réalisée dans le même sens que le sens de la modification de la taille de l'élément qui la/le comprend.

Selon l'invention, le déplacement peut concerner tous les points de l'au moins une zone et/ou un symbole choisi(e) de sorte que l'ensemble de l'au moins une zone et/ou un symbole est déplacé latéralement sur l'écran d'affichage dans une direction prédéterminée.

En particulier, le repositionnement peut être réalisé de sorte que la zone ou le symbole s'éloigne de la position visée par l'objet de commande lorsque la distance verticale diminue.

Ainsi, il est possible d'avoir une sensibilité de déplacement d'un objet sur l'écran d'affichage variable en fonction de la distance de l'objet de commande avec la surface de commande.

Par exemple, une quantité/vitesse/accélération de rotation ou de repositionnement d'un symbole peut être ajustée en fonction de la distance entre l'objet de commande et la surface de commande. Un tel symbole peut, de manière non limitative, être un curseur linéaire ou rotatif de sélection de la valeur d'un paramètre tel que le son, un contraste d'affichage, la date, l'heure, etc.

Selon l'invention, le paramètre relatif au déplacement ajusté en fonction de la distance verticale, peut comprendre au moins l'un des paramètres suivants :

- une quantité de déplacement latéral ou de rotation, sur l'écran d'affichage, de/dans l'au moins une zone et/ou un symbole, pour une distance de déplacement latérale ou une rotation donné de l'objet de commande dans un plan parallèle à la surface de commande ; et
- une vitesse de déplacement latérale ou de rotation, sur l'écran d'affichage, de/dans l'au moins une zone et/ou un symbole, pour une vitesse de déplacement latérale ou une vitesse de rotation donnée de l'objet de commande dans un plan parallèle à la surface de commande ; et/ou
- une accélération de déplacement latérale ou de rotation, sur l'écran d'affichage, de/dans l'au moins une zone et/ou un symbole, pour une accélération de déplacement latérale ou une accélération de rotation donnée de l'objet de commande dans un plan parallèle à la surface de commande ;

Autrement dit, pour deux distances verticales différentes, la quantité/vitesse/accélération de déplacement latéral ou de rotation de/dans l'élément choisi peut être différente pour un même pas de déplacement latéral ou de rotation de l'objet de commande.

En particulier, l'ajustement peut être réalisé de sorte que, pour une même distance de déplacement latérale (ou une même rotation) de l'objet de commande, la quantité/vitesse/accélération de déplacement latérale (ou de rotation) augmente lorsque la distance verticale diminue.

Le déplacement latéral ou la rotation, dont la quantité/vitesse/accélération est ajustée en fonction de la distance verticale, peut être un déplacement ou une rotation dans le même sens ou dans le sens opposé au sens de déplacement latéral de l'objet de commande.

Avantageusement, l'ajustement, en fonction de la distance verticale mesurée, du paramètre relatif au déplacement sur l'écran d'affichage peut être réalisé par l'intermédiaire d'un facteur multiplicateur, également appelé « bras de levier », qui est ajusté en fonction de la distance verticale mesurée. L'utilisation de ce facteur multiplicateur peut être telle que la valeur du paramètre relatif au déplacement sur l'écran d'affichage est obtenue par multiplication de la valeur mesurée du paramètre pour l'objet de commande par la valeur ajustée du facteur multiplicateur en fonction de la distance verticale mesurée, à savoir :

$$(\text{Valeur Paramètre de déplacement sur l'écran}) =$$

$$(\text{Valeur paramètre mesurée pour l'objet de commande}) \times (\text{Valeur facteur}$$

$$\text{multiplicateur})_{\text{ajustée en fonction de la distance verticale}}$$

Dans le cas d'un exemple de réalisation particulier, le symbole choisi peut être une liste comprenant au moins deux symboles, et en ce que le paramètre ajustée comprend la vitesse et/ou l'accélération et/ou une distance latérale de déroulement/défilement de ladite liste.

En particulier, l'ajustement peut être réalisé de sorte que la valeur du paramètre ajusté augmente lorsque la distance verticale diminue.

Selon une particularité avantageuse du procédé selon l'invention, l'étape de contrôle peut être initiée lorsque la distance verticale est inférieure ou égale à une valeur prédéterminée, dite de démarrage.

Le procédé selon l'invention peut en outre comprendre un déclenchement de l'affichage réalisé par l'écran d'affichage lorsque la distance verticale atteint la valeur de démarrage ou une valeur prédéterminée, dite d'affichage, supérieure à ladite valeur de démarrage. Dans ce cas, une ou plusieurs itérations des étapes de mesure et de contrôle peuvent être réalisées sur un élément affiché suite audit déclenchement.

L'étape de contrôle peut être figée/arrêtée lorsque la distance verticale est inférieure ou égale à une valeur prédéterminée, dite de gel. Ainsi, l'affichage est figé pour permettre une sélection plus facile pour l'utilisateur.

Le procédé selon l'invention peut en outre comprendre une étape de sélection d'un élément par contact de l'objet de commande avec la surface de commande, ladite sélection initiant l'exécution d'une commande associée audit élément.

Alternativement, la sélection peut être réalisée lorsque la distance verticale est inférieure ou égale à une valeur prédéterminée, dite de sélection, qui peut être égale à la valeur d'arrêt ou inférieure à la valeur d'arrêt.

Une étape de sélection peut être réalisée après une étape de contrôle, ou une ou plusieurs itérations des étapes de mesure et de contrôle. Dans ce cas la sélection est réalisée sur un élément préalablement déplacé ou pour lequel un paramètre de déplacement a été ajusté lors de l'étape de contrôle.

Une étape de sélection peut alternativement ou en plus être réalisée avant une étape de contrôle. Dans ce cas, une ou plusieurs itérations des étapes de mesure et de contrôle peuvent être réalisées sur un élément affiché suite à ladite sélection.

Le procédé selon l'invention peut avantageusement comprendre une itération continue des étapes de mesures et de contrôle.

Autrement dit, les étapes de mesures et de contrôle sont réalisées de manière continue à une fréquence donnée, par exemple supérieure ou égale à la fréquence d'affichage de l'écran d'affichage.

Alternativement, l'étape de mesure peut être itérée de manière continue à une fréquence donnée, par exemple supérieure ou égale à la fréquence d'affichage, et l'étape de contrôle peut être itérée de manière discrète, c'est-à-dire lorsque la variation de la distance verticale mesurée lors de l'étape de mesure est supérieure ou égale à une valeur prédéterminée. Une telle itération discrète de l'étape de contrôle permet de diminuer les ressources de calcul et l'énergie consommée.

La mesure d'au moins une donnée de distance, et/ou d'au moins une donnée de position, peut comprendre au moins :

- une mesure d'interactions capacitives entre l'objet de commande et au moins un capteur, et
- une mesure de variations d'intensité lumineuse dues à la présence de l'objet de commande.

Selon un autre aspect de l'invention il est proposé un dispositif pour naviguer, par l'intermédiaire d'une surface de commande, dans un écran d'affichage, comprenant au moins un moyen de mesure agencé pour déterminer :

- une donnée, dite position, relative à une position visée, sur ladite surface de commande, par un objet de commande distant positionné en regard de ladite surface de commande, et
- une donnée, dite distance verticale, relative à la distance entre l'au moins un objet de commande distant et ladite surface de commande, en particulier dans un plan perpendiculaire à ladite surface de commande ;

ledit dispositif comprenant en outre au moins un moyen, dit de contrôle, configuré pour ajuster, en fonction de ladite donnée de distance,

- un déplacement, et/ou
- un ajustement d'un paramètre relatif au déplacement ;

d'au moins une partie d'une zone et/ou d'un symbole affiché(e) sur ledit écran d'affichage et choisi en fonction de ladite position visée.

Le moyen de contrôle peut être un module de calcul électronique ou informatique, constitué par un algorithme ou un programme d'ordinateur ou encore une série d'instructions, et exécuté par un processeur, un FPGA ou plus généralement par un circuit intégré.

Le moyen de mesure peut comprendre au moins un capteur capacitif, et/ou au moins un capteur optique.

Avantageusement, le moyen de mesure peut comprendre un ensemble de capteurs capacitifs combiné à au moins un capteur optique, de type caméra. Une telle combinaison permet de mieux détecter et mesurer la position de l'objet de commande car le capteur optique est particulièrement efficace lorsque l'objet de commande est loin de la surface de commande, c'est-à-dire à une distance supérieure de 3 à 10cm suivant la taille de l'objet de commande, et les capteurs capacitifs sont particulièrement efficaces lorsque l'objet de commande est proche de la surface de commande, c'est-à-dire à une distance inférieure de 3 à 10cm suivant la taille de l'objet de commande. Ainsi, une combinaison de ces deux types de capteurs permet de mieux gérer la détection et la mesure de la distance entre l'objet de commande et la surface de commande quelle que soit la distance verticale.

Le dispositif selon l'invention peut en outre comprendre une surface de commande.

Une telle surface de commande peut être transparente.

Une telle surface tactile peut être intégrée ou agencée sous/sur/dans un écran d'affichage, dit tactile.

Selon un exemple de réalisation particulier, une telle surface tactile peut être un pavé tactile (« touchpad » en anglais) ou une tablette graphique.

Selon encore un autre aspect de l'invention il est proposé un appareil comprenant un écran d'affichage pour afficher une pluralité de symboles, et :

- un dispositif selon l'invention, ou
- des moyens agencés pour réaliser toutes les étapes du procédé selon l'invention ;

pour naviguer dans ledit écran d'affichage.

Selon un mode de réalisation préféré, l'écran d'affichage peut être agencé sous une surface de commande transparente comprenant/intégrant au moins un moyen de mesure.

Un tel appareil peut être un écran d'affichage, en particulier un écran d'affichage tactile, un ordinateur, un téléphone, un Smartphone, une tablette, une borne, ou tout autre appareil comprenant des moyens d'interaction avec un utilisateur utilisant un objet de pointage ou de commande ou encore de sélection.

## Description des figures et modes de réalisation

D'autres avantages et caractéristiques apparaîtront à l'examen de la description détaillée d'exemples nullement limitatifs, et des dessins annexés sur lesquels :

- la FIGURE 1 est une représentation schématique d'un exemple de dispositif selon l'invention ;
- la FIGURE 2 est une représentation schématique d'un exemple de procédé selon l'invention ; et
- les FIGURES 3-6 sont des représentations schématiques de quatre exemples non limitatifs de navigation dans un écran d'affichage conformément à l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

On va décrire un mode de réalisation de l'invention mettant en œuvre des capteurs capacitifs. Bien entendu, ce mode de réalisation est un exemple nullement limitatif de mise en œuvre de l'invention adapté à la réalisation d'une interface homme machine (IHM) pour un système hôte tel qu'un téléphone portable, un Smartphone, une tablette ou un ordinateur.

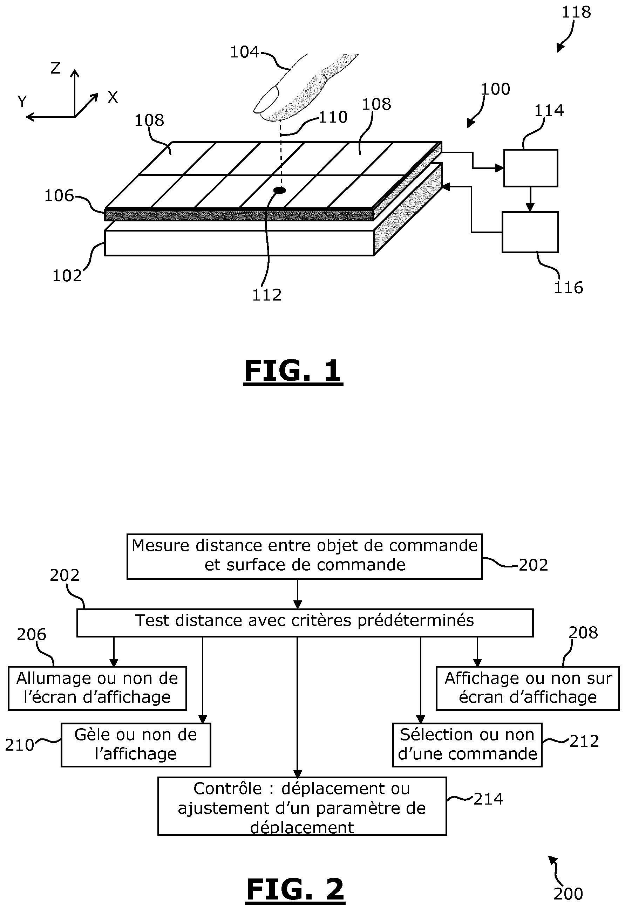

La FIGURE 1 est une représentation schématique d'un exemple de dispositif selon l'invention pour naviguer dans un écran d'affichage.

Le dispositif 100 représenté sur la FIGURE 1 permet de naviguer dans un écran d'affichage 102 avec un objet de commande 104.

L'écran d'affichage 102 peut être basé, par exemple, sur une technologie à cristaux liquides, LCD, TFT (« *Thin-film transistor* » en anglais ou transistor couches minces), ou OLED (« *Organic Light-Emitting Diode* » en anglais ou diode électroluminescente organique).

L'objet de commande 104 est, dans l'exemple représenté sur la FIGURE 1, un doigt d'un utilisateur. L'objet de commande peut être alternativement une main d'un utilisateur ou un stylet.

Le dispositif 100 comprend une surface de commande 106 sensiblement transparente et plane. La surface de commande 106 est disposée sur l'écran d'affichage 102 et permet un accès visuel vers l'écran d'affichage 102 par transparence. Dans l'exemple représenté sur la FIGURE 1, la surface d'affichage est une surface indépendante de l'écran d'affichage 102. Alternativement, la surface de commande 106 peut être l'écran d'affichage 102 ou une surface de l'écran d'affichage 102.

Le dispositif 100 comprend en outre des capteurs capacitifs 108, également sensiblement transparents et aptes à détecter la présence de l'objet de commande 104 Les capteurs capacitifs 108 sont disposés sur la surface de commande 106 dans l'exemple représentés sur la FIGURE 1. Alternativement, les capteurs capacitifs peuvent être intégrés dans la surface de commande 106 ou directement dans l'écran d'affichage 102.

Les capteurs 108 peuvent comprendre des électrodes capacitives à base d'ITO (Oxyde d'indium-étain). Suivant les applications, elles peuvent être d'un nombre et d'une disposition variés, la FIGURE 1 n'ayant qu'une vocation d'illustration.

Les capteurs capacitifs 108 fournissent des informations relatives d'une part à la distance selon l'axe Z entre l'objet de commande 104 et la surface de commande 106, matérialisée par le trait en pointillé 110, et d'autre part des informations relatives à la position dans le plan (X, Y) d'une projection selon l'axe Z de l'objet de commande 104 sur la surface de commande 106, matérialisé par le point 112. Les capteurs capacitifs 108 sont également aptes à détecter un contact entre l'objet de commande 104 et la surface de de commande 106.

Le dispositif 100 comprend en outre un module électronique de mesure 114, relié aux capteurs capacitifs 108, et qui permet de déterminer la distance 110 et la position 112 en fonction des signaux fournis par les capteurs capacitifs 108. Les données relatives à la distance 110 et à la position 112 comprennent des mesures de distance 110 et de position 112 équivalentes. Ces mesures, pas nécessairement exprimés en unités de longueur, sont des traductions de mesures de capacités ou de variations de capacités. En particulier, des caractéristiques physiques de l'objet de commande 104 peuvent affecter les capacités mesurées et donc leur traduction en termes de distance et/ou de positions équivalentes.

Les données relatives à la distance 110 et à la position 112 peuvent également comprendre des trajectoires, définies comme des séquences temporelles de distances 110 et/ou de positions 112, et des grandeurs dérivées telles que des vitesses et des accélérations.

Dans un mode de réalisation préféré, les capteurs 108 et le module électronique de mesure 114 sont réalisés selon les modes décrits dans le document FR 2 971 066 A1.

Le dispositif 100 selon l'invention peut en outre comprendre un module de contrôle 116, se présentant par exemple sous la forme d'un microprocesseur ou CPU (pour « Central processing Unit » en anglais) associé à des composants tels que des mémoires vives (RAM), des moyens de stockage de masse (disque dur, mémoire flash, ...), et permettent d'exécuter un (ou une pluralité) de programme(s) d'ordinateur ou de logiciels. Ce module de contrôle 116 est relie au module de mesure 114. Le module de contrôle 116 est configuré pour :

- en fonction de la position 112 : choisir une zone ou un symbole visé(e) par l'objet de commande 104 sur l'écran d'affichage ;
- en fonction de la distance 110 : déplacer la zone ou un symbole choisi(e) ou ajuster un paramètre relatif au déplacement de la zone ou de symbole choisi(e) ; et éventuellement
- déplacer au moins un autre élément affiché par l'écran d'affichage, en particulier le reste des éléments affichés sur l'écran d'affichage.

Le module de contrôle 116 peut être intégré dans un processeur d'un appareil réalisant, entre autre, un affichage sur l'écran d'affichage 102, c'est-à-dire un processeur générant l'image ou les images à afficher. Un tel appareil peut être un ordinateur, une tablette, un Smartphone, un téléphone, un PDA, etc.

Le module de contrôle 116 peut alternativement se présenter sous la forme d'un processeur à part entière collaborant avec le processeur d'un tel appareil.

Le dispositif 100 avec l'écran d'affichage 102 constituent un exemple non limitatif d'un appareil 118 selon l'invention qui peut être une tablette ou un Smartphone à commande tactile.

La FIGURE 2 est une représentation schématique d'un exemple d'un procédé selon l'invention pour naviguer dans un écran d'affichage.

Le procédé 200 comprend une étape 202 de mesure de la distance verticale entre la surface de commande et l'objet de commande, par exemple la distance 110, et éventuellement la position visée par l'objet de commande, par exemple la position 112.

Lors d'une étape 204, la distance mesurée 110 est comparée à des valeurs seuils prédéterminées.

Les étapes 202 et 204 sont réalisées soit de manière continue à une fréquence prédéterminée soit à une fréquence modulée en fonction de la distance mesurée.

Lors de l'étape 204, les comparaisons suivantes sont réalisées.

La distance mesurée 110 est comparée à une valeur, dite d'allumage, pour décider de l'allumage ou non de l'écran d'affichage. En fonction de cette comparaison, si besoin, une étape 206 réalise l'allumage ou l'extinction de l'écran d'affichage.

La distance mesurée 110 est comparée à une valeur, dite d'affichage, pour décider de l'affichage ou non d'au moins un symbole sur l'écran d'affichage. En fonction de cette comparaison, si besoin, une étape 208 réalise l'affichage ou non d'au moins un élément sur l'écran d'affichage.

La distance mesurée 110 est comparée à une valeur, dite de gel, pour décider si l'affichage réalisée doit être figée ou gelée en vue par exemple de réaliser une sélection l'affichage ou non d'au moins un symbole sur l'écran d'affichage. En fonction de cette comparaison, si besoin, une étape 210 fige ou non l'affichage réalisé sur l'écran d'affichage tel qu'il est.

La distance mesurée 110 est comparée à une valeur, dite de sélection, pour décider si l'objet de commande réalise ou non une sélection d'une commande associée à un symbole. En fonction de cette comparaison, si besoin, une étape 212 déclenche la réalisation de la commande sélectionnée. La valeur de sélection peut être une valeur nulle. Dans ce cas, la sélection est réalisée par contact de l'objet de commande avec la surface de commande.

Enfin, la distance mesurée 110 est testée pour déterminer si elle est comprise entre une valeur dite, de démarrage, et la valeur d'arrêt pour déterminer si une étape de contrôle doit être réalisée. Si la distance mesurée est comprise entre ces deux valeurs, alors une étape 212 de contrôle est réalisée pour déplacer un élément affiché sur l'écran d'affichage ou pour ajuster un paramètre relatif au déplacement d'un élément affiché sur l'écran, un tel élément étant choisi en fonction de la position visée par l'objet de commande.

Lorsque, lors de l'étape 204, plusieurs critères précités sont satisfaits, i.e. lorsque la distance mesurée satisfait plusieurs des valeurs seuil précitées, alors plusieurs des étapes 206-214 peuvent être réalisées à tour de rôle ou en même temps.

Nous allons maintenant décrire des exemples non limitatifs de déplacement ou d'ajustement d'un paramètre relatif au déplacement d'un élément affiché en fonction de la distance verticale selon l'invention. Dans les exemples qui suivent, il est considéré, pour simplifier la description, que la surface de commande correspond à la surface de l'écran d'affichage.

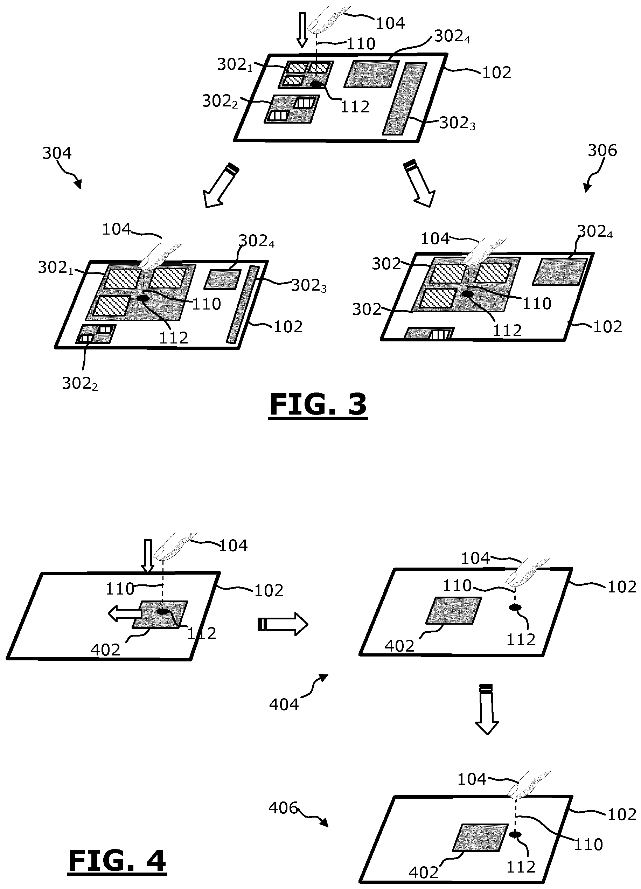

La FIGURE 3 est une représentation schématique d'un premier exemple de déplacement d'un élément affiché sur l'écran d'affichage en fonction de la distance verticale selon l'invention.

L'exemple représenté sur la FIGURE 3 correspond plus particulièrement à la modification de la taille d'un symbole affiché sur l'écran d'affichage, par exemple l'écran d'affichage 102 de la FIGURE 1, en fonction de la distance verticale 110.

L'écran d'affichage affiche quatre symboles $302_1$-$302_4$. Chaque symbole $302_1$ comprend un ou plusieurs symboles, dits sous-symboles.

En fonction de la position 110 de l'objet de commande 104, le symbole $302_1$ ou une zone autour de la position 110 est choisi.

Lorsque l'objet de commande 104 se rapproche de l'écran d'affichage, la taille du symbole $302_1$ ou la zone autour de la position 110 est agrandie ou zoomée, tel que représenté dans les cas 304 et 306, qui correspondent à deux manières de réaliser un tel agrandissement.

Dans le cas 304, lorsque le symbole $302_1$ ou la zone autour de la position 110 est agrandi, la taille des autres symboles ou zones affiché(s) est diminuée de sorte que tous les symboles 302 restent affichés dans l'écran d'affichage.

Dans le cas 306, lorsque le symbole $302_1$ ou la zone autour de la position 110 est agrandi, la taille des autres symboles ou zones affiché(s) est maintenue constante de sorte que le symbole $302_2$ est affiché partiellement sur l'écran d'affichage et le symbole $302_3$ n'est plus affiché dans l'écran d'affichage.

Dans les deux cas 304 et 306, lors de l'agrandissement du symbole $302_1$, un des autres symboles ou zones affichés peut être repositionné entièrement.

De plus, dans l'exemple représenté sur la FIGURE 3, lorsque le symbole $302_1$ est agrandi alors les sous-symboles que contient le symbole $302_1$ sont également agrandis. Ce traitement est optionnel et les sous-symboles peuvent ne pas être agrandis.

Bien entendu lorsque le doigt s'éloigne de l'écran d'affichage la taille du ou des symboles ou de la zone préalablement agrandie est diminuée de manière bijective et les autres éléments affichés sont agrandis et repositionnés également de manière bijective.

Lorsque l'objet de commande change de position dans le plan de l'écran d'affichage alors le traitement qui vient d'être décrit est appliqué, de manière continue, à un autre symbole ou à une autre zone relativement à chaque nouvelle position visée par l'objet de commande.

La FIGURE 4 est une représentation schématique d'un deuxième exemple de déplacement d'un élément affiché sur l'écran d'affichage en fonction de la distance verticale selon l'invention.

L'exemple représenté sur la FIGURE 4 correspond plus particulièrement au repositionnement d'un symbole 402 affiché sur l'écran d'affichage, par exemple l'écran d'affichage 102 de la FIGURE 1, en fonction de la distance verticale 110.

Dans la configuration 404, la position 112 de l'objet de commande 104 est utilisé pour choisir le symbole 402.

Lorsque l'objet de commande 104 se rapproche de l'écran 102, c'est-à-dire lorsque la distance 110 diminue, le symbole 402 est éloigné de la position initiale 112 suivant une direction et un sens prédéterminés, tel que représenté dans la configuration 404.

Lorsqu'ensuite, l'objet de commande 104 s'éloigne de l'écran 102, c'est-à-dire lorsque la distance 110 augmente, le symbole 402 se rapproche de la position initiale 112, en se déplaçant dans la direction et le sens contraires, tel que représenté dans la configuration 406.

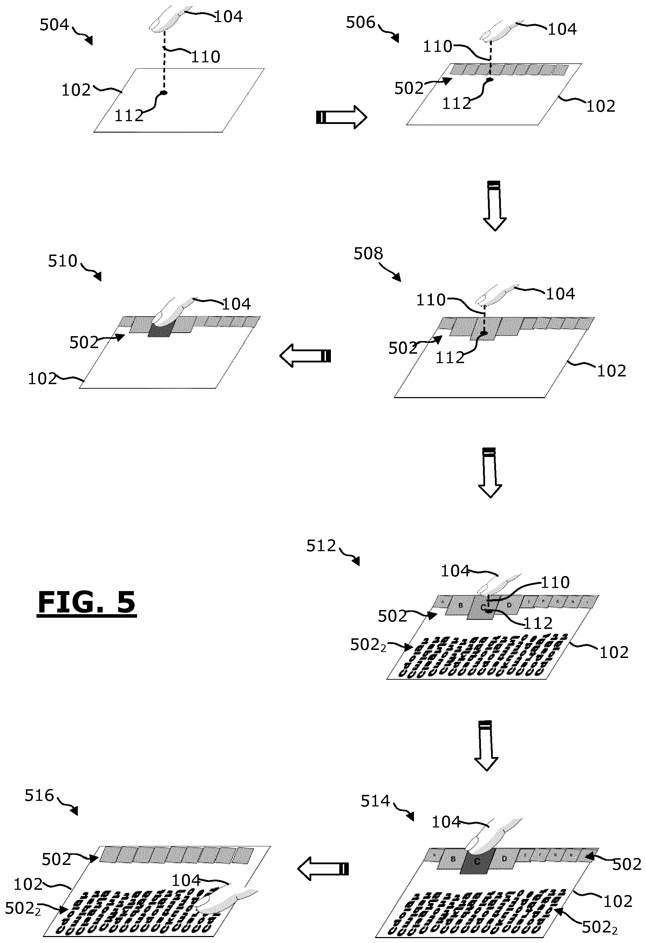

La FIGURE 5 est une représentation schématique d'un troisième exemple de déplacement d'un élément affiché sur l'écran d'affichage en fonction de la distance verticale selon l'invention.

L'exemple représenté sur la FIGURE 5 correspond plus particulièrement à la manipulation d'une liste 502 de symboles, affichée sur un bord d'un écran d'affichage, par exemple l'écran d'affichage 102 de la FIGURE 1, en fonction de la distance verticale 110.

Dans la configuration 504, l'objet de commande 104 s'approche de la surface de l'écran 102.

Tel que représenté à la configuration 506, lorsque la distance 110 entre l'objet de commande 104 et l'écran 102 est inférieure ou égale à une distance prédéterminée, dite d'affichage, la liste 502 de symboles est affichée sur l'écran 102.

Lorsque l'objet de commande 104 continue de se rapprocher de l'écran d'affichage 102, une partie de la liste 502 choisie en fonction de la position 112 visée par l'objet de commande 104 est agrandie, tel que représenté dans la configuration 508. Plus particulièrement, la taille de symboles adjacents à la position 112 visée par l'objet de commande 104, est augmentée et la taille des symboles les plus éloignés de la position 112 est diminuée. Certains des symboles de la liste 502 sont également repositionnés de sorte à garder l'ensemble de la liste affichée sur l'écran d'affichage. La modification de la taille des différents symboles est fonction de la distance 110 entre l'objet de commande et la surface de l'écran d'affichage 102. Autrement dit, la taille des différents symboles de la liste de symbole 502 est ajustée en fonction de la distance 110.

Dans une première variante, représentée dans la configuration 510, lorsqu'ensuite l'objet de commande 104 touche l'écran ou la distance 110 entre l'objet de commande 104 et l'écran 102 est inférieure ou égale à une distance prédéterminée, dite de sélection, un symbole est sélectionné dans la liste 502 de symboles.

Dans une deuxième variante, représentée dans la configuration 512, l'objet de commande 104 continue de se rapprocher de l'écran 102. En fonction de la position 112 visée, et lorsque la distance 110 passe en dessous d'une valeur prédéterminée, un des symboles de la liste 502 de symboles est choisi, à savoir le symbole « C ». Le symbole choisi, peut être signalé par un changement de couleur par tout autre moyen. Le choix d'un symbole dans la liste 502 des symboles, déclenche l'affichage d'une autre liste $502_2$ correspondant au contenu du symbole, tel que par exemple une liste de noms commençant par la lettre C. Cette autre liste $502_2$ peut être affichée au niveau d'un autre bord de l'écran d'affichage 102, par exemple le bord opposé. Le choix d'un symbole a pour conséquence de figer l'affichage réalisé sur l'écran 102.

La configuration 512 est ensuite suivie d'une configuration 514 représentant la sélection du symbole préalablement choisi, tel que décrit plus haut en référence à la configuration 510.

Après la sélection d'un symbole, par exemple par contact de l'objet de commande 104 avec l'écran 102, l'utilisateur a la possibilité de naviguer dans la deuxième liste $502_2$, tel que représenté dans la configuration 516.

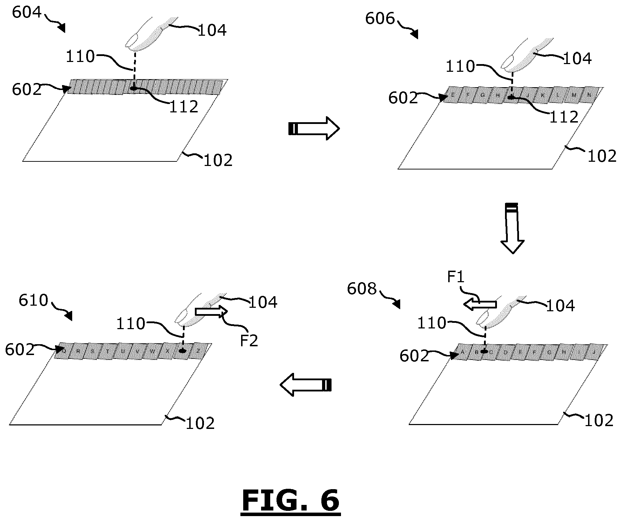

La FIGURE 6 est une représentation schématique d'un quatrième exemple de déplacement d'un élément affiché sur l'écran d'affichage en fonction de la distance verticale selon l'invention.

L'exemple représenté sur la FIGURE 6 correspond plus particulièrement à la manipulation d'une liste 602 de symboles, affichée sur un bord d'un écran d'affichage, par exemple l'écran d'affichage 102 de la FIGURE 1, en fonction de la distance verticale 110. Tel que représenté dans la configuration 604, la liste 602 comprend une multitude de symboles de petite taille qu'il est difficile de sélectionner avec l'objet de commande 104.

Lorsque l'objet de commande 104 se rapproche de l'écran, i.e. la distance 110 diminue, la liste 602 est zoomée autour de la position 112 de l'objet de commande 104 de sorte que seule une partie de la liste est affichée sur l'écran 102. Le résultat obtenu est montré dans la configuration 606. Le zoom réalisé est fonction de la distance 110 entre l'objet de commande 104 et la surface de l'écran 102.

Lorsque l'objet de commande 104 se déplace dans un premier sens matérialisé par la flèche F1 représentée dans la configuration 608, la liste défile toujours dans le même sens que l'objet de commande 104, toujours en restant zoomée.

Lorsque l'objet de commande 104 se déplace dans le sens contraire matérialisé par la flèche F2 représentée dans la configuration 610, la liste défile dans le même sens que l'objet de commande 104, tout en restant zoomée.

La quantité et/ou la vitesse de défilement de la liste 602 sur l'écran d'affichage, pour une distance de déplacement latéral de l'objet de commande est ajustée en fonction de la distance 110 entre l'objet de commande 104 et l'écran 102. Plus précisément, plus la distance 110 est petite, plus la vitesse/quantité de défilement de la liste 602 sur l'écran d'affichage est élevée, *vice et versa.*

Dans un autre mode de réalisation non représenté, l'invention permet d'ajuster la quantité/vitesse de défilement d'une liste de symboles ou la rotation d'un symbole ou encore le repositionnement d'un symbole sans pour autant que la taille du symbole ou de la liste ne soit modifiée en fonction de la distance entre un objet de commande et la surface de commande. Dans ce cas, la distance entre l'objet de commande et la surface commande est utilisée pour ajuster la quantité/vitesse concernée et la liste ou le symbole est manipulé par le déplacement latéral de l'objet de commande dans le plan de la surface de commande.

Par exemple, selon l'invention, il est possible d'ajuster la quantité de défilement sur l'écran d'une liste de symbole en fonction de la distance entre l'objet de commande ou la surface de commande sans pour autant modifier la taille de cet élément. Dans ce cas, à un pas de déplacement donné de l'objet de commande dans la plan de la surface de commande, correspond plusieurs quantités de déplacements choisies/ajustées en fonction de la distance entre l'objet de commande et la surface de commande.

Cet exemple est applicable à une vitesse de rotation ou à une vitesse de repositionnement d'un symbole, qui peut par exemple être un curseur linéaire ou rotatif.

Bien sûr, l'invention n'est pas limitée aux exemples qui viennent d'être décrits et de nombreux aménagements peuvent être apportés à ces exemples sans sortir du cadre de l'invention tel que défini par les revendications.

**Revendications**

1. Procédé (200) pour naviguer dans un écran d'affichage (102) par l'intermédiaire d'une surface de commande (106), comprenant :

   une étape d'affichage d'une première liste incluant une pluralité de symboles sur l'écran d'affichage (102) ; et
   une étape (202) de mesure :

   - d'une donnée, dite position, relative à une position (112) visée, sur ladite surface de commande (106), par au moins un objet de commande (104) distant positionné en regard de ladite surface de commande (106), et
   - d'une donnée, dite distance verticale, relative à la distance (110) entre ledit au moins un objet de commande (104) distant et ladite surface de commande (106) ;

   **caractérisé en ce qu'**il comprend en outre une étape (214) d'agrandissement d'au moins deux symboles de la pluralité de symboles par un même agrandissement variable en fonction de ladite distance verticale (110) mesurée, lesdits deux ou plusieurs symboles de la pluralité de symboles incluant au moins un premier symbole ($302_1$; 402; $502_1$; 602) correspondant à une première position visée (112) ;
   une étape de repositionnement d'autres symboles de la pluralité de symboles de sorte qu'au moins un des autres symboles se déplace hors de l'écran d'affichage (102) ;
   après l'agrandissement dudit au moins deux symboles et le repositionnement d'autres symboles, une étape de mesure d'un changement de la position correspondant à un mouvement de l'objet de commande (104) à travers l'écran d'affichage (102) ; et
   en réponse à la mesure du changement de la position correspondant à un mouvement de l'objet de commande (104) à travers l'écran d'affichage (102) :

   en fonction de la mesure du changement de la position correspondant au mouvement de l'objet de commande (104) à travers l'écran d'affichage (102) tout en étant à une première distance verticale, une étape de défilement de la première liste de symboles avec une première vitesse de défilement ou avec une première quantité de défilement en fonction du changement de la position ; et
   en fonction de la mesure du changement de la position correspondant au mouvement de l'objet de commande (104) à travers l'écran d'affichage (102) tout en étant à une deuxième distance verticale, une étape de défilement de la première liste de symboles avec une deuxième vitesse de défilement différente de la première vitesse de défilement ou avec une deuxième quantité de défilement différente de la première quantité de défilement en fonction du changement de la position.

2. Procédé (200) selon la revendication 1, **caractérisé en ce que** l'étape de repositionnement d'autres symboles de la pluralité de symboles comprend en outre varier au moins une vitesse, une accélération ou un mouvement latéral des autres symboles en fonction de ladite distance verticale.

3. Procédé (200) selon la revendication 1, **caractérisé en ce qu'**il comprend en outre une étape d'agrandissement dudit au moins deux symboles lorsque la distance verticale est inférieure ou égale à une valeur prédéterminée, dite démarrage.

4. Procédé (200) selon la revendication 1, dans laquelle l'agrandissement variable dudit au moins deux symboles et le repositionnement d'au moins un symbole de ladite pluralité de symboles est arrêté lorsque la distance verticale est inférieure ou égale à une valeur prédéterminée, dite de gel.

5. Procédé (200) selon la revendication 1, **caractérisé en ce qu'**il comprend en outre une étape de sélection d'un symbole en mettant l'objet de commande (104) en contact avec la surface de commande (106), ladite sélection initiant l'exécution d'une commande associée audit symbole.

6. Procédé (200) selon la revendication 1, **caractérisé en ce qu'**il comprend en outre une étape de répétition de la mesure de la position et de la distance verticale, et une étape de répétition de l'agrandissement variable dudit au moins deux symboles.

7. Procédé (200) selon la revendication 1, dans lequel la mesure de la distance verticale et de la position comprend : une mesure des interactions capacitives entre l'objet de commande (104) et au moins un capteur.

8. Procédé (200) selon la revendication 1, **caractérisé en ce qu'**il comprend en outre une étape d'affichage de la première liste en réponse à la mesure que la distance entre ledit au moins un objet de commande (104) distant et ladite surface de commande (106) satisfait à un premier seuil de distance verticale.

9. Procédé (200) selon la revendication 1, **caractérisé en ce qu'**il comprend en outre :

   une étape de sélection d'une symbole amenant l'objet de commande (104) à une distance de sélection de la surface de commande (106) ; et
   une étape d'affichage d'une deuxième liste en réponse à la sélection du symbole.

10. Procédé (200) selon la revendication 9, **caractérisé en ce que** le symbole sélectionné correspond à un caractère et **en ce que** la deuxième liste inclut une pluralité de mots commençant par le symbole sélectionné.

11. Procédé (200) selon la revendication 9, **caractérisé en ce qu'**il comprend en outre :

   une étape de continuation d'affichage de la première liste et de la deuxième liste pendant que l'objet de commande (104) navigue à partir du dessus de la première position visée (112) jusqu'au-dessus d'une deuxième position visée correspondant à la deuxième liste ; et
   une étape de sélection d'un symbole amenant l'objet de commande (104) en contact avec la surface de commande (106) ou amenant l'objet de commande (104) à une deuxième distance de sélection de la surface de commande (106), ladite sélection initiant une exécution d'une commande associée avec ledit symbole de la deuxième liste.

12. Procédé (200) selon la revendication 1, **caractérisé en ce qu'**il comprend en outre, en fonction de la mesure du changement de la position correspondant au mouvement de l'objet de commande (104) à travers de l'écran d'affichage (102) dans une première direction depuis le dessus de la première position visée (112) jusqu'au-dessus d'une deuxième position visée correspondant à la première liste, une étape de défilement dans la première liste de symboles dans une première direction de sorte qu'au moins un dudit au moins un autre symbole s'étant déplacé hors de l'écran d'affichage (102) retourne sur l'écran d'affichage (102) et qu'au moins un symbole de la pluralité de symboles sur l'écran d'affichage (102) se déplace hors de l'écran d'affichage (102).

13. Procédé (200) selon la revendication 12, **caractérisé en ce qu'**il comprend en outre, en fonction de la mesure du changement de la position correspondant au mouvement de l'objet de commande (104) à travers de l'écran d'affichage (102) dans une deuxième direction depuis le dessus de la deuxième position visée jusqu'au-dessus d'une première position visée correspondant à la première liste, une étape de défilement dans la première liste de symboles dans une deuxième direction de sorte qu'au moins un dudit au moins un autre symbole s'étant déplacé hors de l'écran d'affichage (102) retourne sur l'écran d'affichage (102) et qu'au moins un symbole de la pluralité de symboles sur l'écran d'affichage (102) se déplace hors de l'écran d'affichage (102).

14. Appareil (118) comprenant un écran tactile, l'appareil étant agencé pour réaliser toutes les étapes du procédé (200) selon l'une quelconque des revendications 1 à 13.

15. Un support de stockage comprenant des instructions qui, si elles sont exécutés sur un dispositif informatique avec un écran tactile, conduisent le dispositif informatique à effectuer les étapes du procédé (200) selon l'une quelconque des revendications 1 à 13.

**Patentansprüche**

1. Verfahren (200) zum Navigieren in einem Anzeigebildschirm (102) mittels einer Befehlsoberfläche (106), umfassend:

einen Schritt zum Anzeigen einer ersten Liste mit einer Vielzahl von Symbolen auf dem Anzeigebildschirm (102); und
einen Schritt (202) zum Messen:

- eines Datenelements, genannt Position, bezogen auf eine Position (112) auf der Befehlsoberfläche (106), die von zumindest einem entfernten Befehlsobjekt (104) angepeilt wird, das gegenüber der Befehlsoberfläche (106) positioniert ist, und
- eines Datenelements, genannt vertikaler Abstand, bezogen auf den Abstand (110) zwischen dem zumindest einen entfernten Befehlsobjekt (104) und der Befehlsoberfläche (106);

**dadurch gekennzeichnet, dass** das Verfahren ferner umfasst:

einen Schritt (214) zum Vergrößern von zumindest zwei Symbolen der Vielzahl von Symbolen durch eine gleiche variable Vergrößerung in Abhängigkeit von dem gemessenen vertikalen Abstand (110), wobei die zwei oder mehreren Symbole der Vielzahl von Symbolen zumindest ein erstes Symbol ($302_1$; 402; $502_1$; 602) beinhalten, das einer ersten angepeilten Position (112) entspricht;
einen Schritt zum Neupositionieren anderer Symbole aus der Vielzahl von Symbolen, so dass sich zumindest eines der anderen Symbole aus dem Anzeigebildschirm (102) herausbewegt;
nach dem Vergrößern der zumindest zwei Symbolen und dem Neupositionieren der anderen Symbole, einen Schritt zum Messen einer Änderung einer Position, die der Bewegung des Befehlsobjekts (104) über den Anzeigebildschirm (102) entspricht; und

als Reaktion auf das Messen der Änderung der Position, die der Bewegung des Befehlsobjekts (104) über den Anzeigebildschirm (102) entspricht:

in Abhängigkeit von dem Messen der Änderung der Position, die der Bewegung des Befehlsobjekts (104) über den Anzeigebildschirm (102) entspricht, während es sich in einem ersten vertikalen Abstand befindet, einen Schritt zum Scrollen der ersten Liste von Symbolen mit einer ersten Scroll-Geschwindigkeit oder um einen ersten Scroll-Umfang gemäß der Änderung der Position; und
in Abhängigkeit von dem Messen der Änderung der Position, die der Bewegung des Befehlsobjekts (104) über den Anzeigebildschirm (102) entspricht, während es sich in einem zweiten vertikalen Abstand befindet, einen Schritt zum Scrollen der ersten Liste von Symbolen mit einer zweiten Scroll-Geschwindigkeit, die sich von der ersten Scroll-Geschwindigkeit unterscheidet, oder um einen zweiten Scroll-Umfang, der sich von dem ersten Scroll-Umfang unterscheidet, gemäß der Änderung der Position.

2. Verfahren (200) nach Anspruch 1, **dadurch gekennzeichnet, dass** der Schritt zum Neupositionieren der anderen Symbole der Vielzahl von Symbolen ferner ein Variieren zumindest einer Geschwindigkeit, Beschleunigung oder Querbewegung der anderen Symbole in Abhängigkeit von dem gemessenen vertikalen Abstand umfasst.

3. Verfahren (200) nach Anspruch 1, **dadurch gekennzeichnet, dass** es ferner einen Schritt zum Vergrößern der zumindest zwei Symbole umfasst, wenn der vertikale Abstand kleiner oder gleich einem vorbestimmten Wert ist, der als Start bezeichnet wird.

4. Verfahren (200) nach Anspruch 1, wobei die variable Vergrößerung der zumindest zwei Symbole und die Neupositionierung des zumindest einen Symbols aus der Vielzahl der Symbole gestoppt wird, wenn der vertikale Abstand kleiner oder gleich einem vorbestimmten Wert ist, der als Einfrieren bezeichnet wird.

5. Verfahren (200) nach Anspruch 1, **dadurch gekennzeichnet, dass** es ferner einen Schritt zum Auswählen eines Symbols umfasst, indem das Befehlsobjekt (104) mit der Befehlsoberfläche (106) in Kontakt gebracht wird, wobei die Auswahl die Ausführung eines dem Symbol zugeordneten Befehls einleitet.

6. Verfahren (200) nach Anspruch 1, **dadurch gekennzeichnet, dass** es ferner einen Schritt zum Wiederholen der Messung der Position und des vertikalen Abstands und einen Schritt zum Wiederholen der variablen Vergrößerung der zumindest zwei Symbole umfasst.

**7.** Verfahren (200) nach Anspruch 1, wobei das Messen des vertikalen Abstands und der Position umfasst: Messen von kapazitiven Wechselwirkungen zwischen dem Befehlsobjekt (104) und zumindest einem Sensor.

**8.** Verfahren (200) nach Anspruch 1, **dadurch gekennzeichnet, dass** es ferner einen Schritt zum Anzeigen der ersten Liste als Reaktion auf das Messen umfasst, dass der Abstand zwischen dem zumindest einen entfernten Befehlsobjekt (104) und der Befehlsoberfläche (106) einen ersten vertikalen Abstandsschwellenwert erreicht.

**9.** Verfahren (200) nach Anspruch 1, **dadurch gekennzeichnet, dass** es ferner einen Schritt zum Auswählen eines Symbols umfasst, indem das Befehlsobjekt (104) in einen Auswahlabstand von der Befehlsoberfläche (106) gebracht wird; und einen Schritt zum Anzeigen einer zweiten Liste als Reaktion auf das Auswählen des Symbols.

**10.** Verfahren (200) nach Anspruch 9, **dadurch gekennzeichnet, dass** das ausgewählte Symbol einem Zeichen entspricht und die zweite Liste eine Vielzahl von Wörtern beinhaltet, die mit dem ausgewählten Symbol beginnen.

**11.** Verfahren (200) nach Anspruch 9, **dadurch gekennzeichnet, dass** es ferner umfasst:

einen Schritt zum Fortsetzen der Anzeige der ersten Liste und der zweiten Liste, während das Befehlsobjekt (104) von über der ersten angepeilten Position (112) bis über eine zweite angepeilte Position entsprechend der zweiten Liste navigiert; und

einen Schritt zum Auswählen eines Symbols in der zweiten Liste, indem das Befehlsobjekt (104) mit der Befehlsoberfläche (106) in Kontakt gebracht wird, oder indem das Befehlsobjekt in einen zweiten Auswahlabstand von der Befehlsoberfläche (106) gebracht wird, wobei die Auswahl die Ausführung eines dem Symbol in der zweiten Liste zugeordneten Befehls einleitet.

**12.** Verfahren (200) nach Anspruch 1, **dadurch gekennzeichnet, dass** es ferner, in Abhängigkeit der Messung der Änderung der Position, die der Bewegung des Befehlsobjekts (104) über den Anzeigebildschirm (102) in eine erste Richtung von über der ersten angepeilten Position (112) bis über eine zweite angepeilte Position entspricht, die der ersten Liste entspricht, einen Schritt zum Scrollen der ersten Liste von Symbolen in eine erste Richtung umfasst, so dass zumindest eines des zumindest einen anderen Symbols, das aus dem Anzeigebildschirm (102) herausbewegt wurde, zurück auf den Anzeigebildschirm (102) bewegt wird und zumindest eines der Vielzahl von Symbolen auf dem Anzeigebildschirm (102) aus dem Anzeigebildschirm (102) herausbewegt wird.

**13.** Verfahren (200) nach Anspruch 12, **dadurch gekennzeichnet, dass** es ferner, in Abhängigkeit der Messung der Änderung der Position, die der Bewegung des Befehlsobjekts (104) über den Anzeigebildschirm (102), in eine zweiten Richtung von über der zweiten angepeilten Position bis über die erste angepeilte Position entspricht, die der ersten Liste entspricht, einen Schritt zum Scrollen der ersten Liste von Symbolen in die zweite Richtung umfasst, so dass sich zumindest eines des zumindest einen anderen Symbols, das aus dem Anzeigebildschirm (102) herausbewegt wurde, wieder auf den Anzeigebildschirm (102) bewegt wird und zumindest eines der Vielzahl von Symbolen auf dem Anzeigebildschirm (102) aus dem Anzeigebildschirm (102) herausbewegt wird.

**14.** Vorrichtung (118) mit einer berührungsempfindlichen Anzeige, wobei die Vorrichtung konfiguriert ist, um das Verfahren (200) nach einem der Ansprüche 1 bis 13 durchzuführen.

**15.** Computerlesbares Speichermedium mit darin gespeicherten Anweisungen, die, wenn sie von einer Rechenvorrichtung mit einer berührungsempfindlichen Anzeige ausgeführt werden, bewirken, dass die Rechenvorrichtung das Verfahren (200) nach einem der Ansprüche 1 bis 13 durchführt.

**Claims**

**1.** A method (200) for navigating in a display screen (102) via a command surface (106), comprising:

a step of displaying a first list including a plurality of symbols on the display screen (102); and
a step (202) of measuring:

- a data item, referred to as position, relating to a position (112), on the command surface (106), targeted by at least one remote command object (104) positioned opposite to the command surface (106), and
- a data item, referred to as vertical distance, relating to the distance (110) between the at least one remote command object (104) and the command surface (106);

**characterized in that** the method further comprises:

a step (214) of magnifying at least two symbols of the plurality of symbols by a same variable magnification according to the measured vertical distance (110), the two or more symbols of the plurality of symbols including at least a first symbol ($302_1$; 402; $502_1$; 602) corresponding to a first targeted position (112);
a step of repositioning other symbols of the plurality of symbols such that at least one of the other symbols moves out of the display screen (102);
after magnifying the at least two symbols and repositioning the other symbols, a step of measuring a change in position corresponding to movement of the command object (104) across the display screen (102); and

in response to measuring the change in the position corresponding to movement of the command object (104) across the display screen (102):

in accordance with measuring the change in the position corresponding to movement of the command object (104) across the display screen (102) while at a first vertical distance, a step of scrolling the first list of symbols with a first speed of scrolling or by a first amount of scrolling in accordance with the change in the position; and
in accordance with measuring the change in the position corresponding to the movement of the command object (104) across the display screen (102) while at a second vertical distance, a step of scrolling the first list of symbols with a second speed of scrolling different from the first speed of scrolling or by a second amount of scrolling different from the first amount of scrolling in accordance with the change in the position.

2. The method (200) of claim 1, **characterized in that** repositioning of the other symbols of the plurality of symbols further comprises varying at least a speed, acceleration, or lateral movement of the other symbols according to the measured vertical distance.

3. The method (200) of claim 1, **characterized in that** it further comprises a step of magnifying the at least two symbols when the vertical distance is less than or equal to a predetermined value, referred to as start.

4. The method (200) of claim 1, wherein the variable magnification of the at least two symbols and the repositioning of the at least one symbol of the plurality of symbols is stopped when the vertical distance is less than or equal to a predetermined value, referred to as freeze.

5. The method (200) of claim 1, **characterized in that** it further comprises a step of selecting a symbol by bringing the command object (104) in contact with the command surface (106), the selection initiating the execution of a command associated with the symbol.

6. The method (200) of claim 1, **characterized in that** it further comprises a step of repeating the measurement of the position and the vertical distance, and a step of repeating the variable magnification of the at least two symbols.

7. The method (200) of claim 1, wherein the measurement of the vertical distance and the position comprises:
a measurement of capacitive interactions between the command object (104) and at least one sensor.

8. The method (200) of claim 1, **characterized in that** it further comprises a step of displaying the first list in response to measuring that the distance between the at least one remote command object (104) and the command surface (106) meets a first vertical distance threshold.

9. The method (200) of claim 1, **characterized in that** it further comprises a step of selecting a symbol by bringing the command object (104) within a selection distance of the command surface (106); and a step of displaying a second list in response to selecting the symbol.

10. The method (200) of claim 9, **characterized in that** the selected symbol corresponds to a character and the second list includes a plurality of words beginning with the selected symbol.

11. The method (200) of claim 9, **characterized in that** it further comprises:

a step of continuing to display the first list and the second list while the command object (104) navigates from above the first targeted position (112) to above a second targeted position corresponding to the second list; and

a step of selecting a symbol in the second list by bringing the command object (104) in contact with the command surface (106) or by bringing the command object within a second selection distance of the command surface (106), the selection initiating the execution of a command associated with the symbol in the second list.

12. The method (200) of claim 1, **characterized in that** it further comprises, in accordance with measuring the change in position corresponding to movement of the command object (104) across the display screen (102) in a first direction from above the first targeted position (112) to above a second targeted position corresponding to the first list, a step of scrolling the first list of symbols in the first direction such that at least one of the at least one other symbol that moved out of the display screen (102) moves back onto the display screen (102) and at least one of the plurality of symbols on the display screen (102) moves out of the display screen (102).

13. The method (200) of claim 12, **characterized in that** it further comprises, in accordance with measuring the change in position corresponding to movement of the command object (104) across the display screen (102) in a second direction from above the second targeted position to above the first targeted position corresponding to the first list, a step of scrolling the first list of symbols in the second direction such that at least one of the at least one other symbol that moved out of the display screen (102) moves back onto the display screen (102) and the at least one of the plurality of symbols on the display screen (102) moves out of the display screen (102).

14. An apparatus (118) including a touch screen, the apparatus configured to perform the method (200) of any of claims 1 to 13.

15. A computer readable storage medium having stored therein instructions, which when executed by a computing device with a touch screen, cause the computing device to perform the method (200) of any of claims 1 to 13.

**FIG. 1**

Mesure distance entre objet de commande et surface de commande — 202

202

Test distance avec critères prédéterminés

206

208

Allumage ou non de l'écran d'affichage

Affichage ou non sur écran d'affichage

Gèle ou non de l'affichage

210

Sélection ou non d'une commande — 212

Contrôle : déplacement ou ajustement d'un paramètre de déplacement — 214

200

**FIG. 2**

**FIG. 3**

**FIG. 4**

**FIG. 5**

**FIG. 6**

## RÉFÉRENCES CITÉES DANS LA DESCRIPTION

**Documents brevets cités dans la description**

- FR 2971066 A1
- US 2011164063 A1
- EP 2426581 A2
- US 2012026113 A1
- EP 2104024 A1
- US 2009289914 A1
- US 2011221776 A1
- US 2007216659 A1